# EUROPEAN PATENT APPLICATION

(11) **EP 4 803 586 A1**
(43) Date of publication of application: **09.09.2026**
(21) Application number: 24886402.7
(22) Date of filing: 04.11.2024
(51) Int. Cl.: C09D 167/04, C09D 5/00, C09D 7/40, D21H 27/10, D21H 19/10

(54) **COATING COMPOSITION AND PACKAGING MATERIAL MANUFACTURED USING SAME**

(30) Priority: 03.11.2023 KR 20230150499
(71) Applicant: CJ Cheiljedang Corporation, Seoul 04560 (KR)
(72) Inventor: LIM, Kook Hee, Seoul 04560 (KR); CHO, Kyoung Sik, Seoul 04560 (KR); SONG, Hui Jae, Seoul 04560 (KR)
(74) Representative: Meissner Bolte Partnerschaft mbB
(86) International application number: PCT/KR2024/017184
(87) International publication number: WO 2025/095732

(57) **Abstract**

The present invention relates to a coating composition and a packaging material manufactured by using same. The coating composition comprises: polyhydroxyalkanoate (PHA); and two or more polylactic acids (PLA). The present invention can provide a packaging material having improved physical properties due to the coating composition.

## Description

### Technical Field

The present disclosure relates to a coating composition used in the preparation of packaging materials and to a packaging material (paper-based packaging material) comprising a coating layer prepared from the coating composition, whereby the packaging material is excellent in biodegradability and recyclability, while it has enhanced durability, water resistance, oil resistance, thermal resistance, and contamination resistance.

### Background Art

In general, paper has high breathability and low stretchability, so that it has limitations in its application as a packaging material for food products that require barrier properties and formability. Accordingly, to complement the performance of paper packaging materials, packaging materials have been developed in which various types of synthetic resins (e.g., polyolefin resins such as polyethylene and polypropylene) are coated on paper as a base substrate.

However, unlike paper packaging materials that decompose naturally in a relatively short period of time in soil, packaging materials coated with synthetic resins have a problem in that the synthetic resin coating layer remains after landfill due to the difficulty of decomposition of the synthetic resins, thereby lowering the environmental friendliness value of the packaging materials.

To improve the above problem, technologies have been proposed for preparing packaging materials by applying biodegradable resins instead of synthetic resins. For example, packaging materials extrusion-coated with polylactic acid (PLA) may be provided. The polylactic acid (PLA) is obtained by a condensation reaction of lactic acid, and monomers for its preparation are produced during the fermentation process of plants such as corn, cassava, and sugarcane.

The polylactic acid (PLA) is known as a representative biodegradable resin. To be precise, however, it is biodegradable under industrial composting conditions; thus, it is preferable to classify it as a compostable resin. Therefore, packaging materials coated with polylactic acid (PLA) have various restrictions in terms of environmental conditions on the disposal method after completion of use. When landfilled, they require a decomposition period as long as that of packaging materials coated with synthetic resins, thereby raising concerns about green-washing, which has recently emerged as a social issue. In addition, biodegradable resins such as polylactic acid (PLA) have lower melting temperatures and thermal resistance than synthetic resins. Thus, there are limitations in applying them to mass production packaging material manufacturing lines that operate under high-temperature and/or high-pressure conditions.

Accordingly, there is a need to develop packaging materials that are excellent in biodegradability and have improved physical properties, such as thermal resistance, so that they can be applied to various fields.

### Disclosure of Invention

### Technical Problem

To solve the above conventional problems, an object of the present disclosure is to provide a coating composition capable of forming a coating layer with secured thermal stability and stretchability as it comprises one or more specific polymer resins.

In addition, another object of the present disclosure is to provide a packaging material comprising a coating layer prepared from the above coating composition, whereby the packaging material is excellent in biodegradability and recyclability, while it has enhanced durability, water resistance, oil resistance, thermal resistance, and contamination resistance.

In addition, another object of the present disclosure is to provide a process for preparing a packaging material that can efficiently prepare the packaging material.

### Solution to Problem

To accomplish the above object, the present disclosure provides a coating composition that comprises polyhydroxyalkanoate (PHA); and two or more types of polylactic acid (PLA).

According to an embodiment of the present disclosure, the polyhydroxyalkanoate may comprise a repeat unit derived from 4-hydroxybutyrate (4HB) in an amount of 0.1% by weight to 60% by weight based on the total weight of the polyhydroxyalkanoate.

According to another embodiment of the present disclosure, the polylactic acid (PLA) may comprise a first polylactic acid; and a second polylactic acid having a melt index (MI) different from that of the first polylactic acid.

According to another embodiment of the present disclosure, the melt index (MI) of the first polylactic acid may be 40 g/10 minute to 70 g/10 minute, and the melt index (MI) of the second polylactic acid may be 1 g/10 minute to 30 g/10 minute.

According to another embodiment of the present disclosure, the content of the polyhydroxyalkanoate may be 5% by weight to 65% by weight, the content of the first polylactic acid may be 30% by weight to 75% by weight, and the content of the second polylactic acid may be 5% by weight to 20% by weight, based on the total weight of the mixed resin in which the polyhydroxyalkanoate and the polylactic acid are mixed.

According to another embodiment of the present disclosure, the content of the polyhydroxyalkanoate contained in the coating composition may be 5% by weight to 65% by weight, and the content of the polylactic acid contained in the coating composition may be 35% by weight to 95% by weight, based on the total weight of the mixed resin in which the polyhydroxyalkanoate and the polylactic acid are mixed.

According to another embodiment of the present disclosure, the polyhydroxyalkanoate may have a weight average molecular weight (Mw) of 100,000 g/mole to 1,000,000 g/mole, a melting temperature (Tₘ) of 120°C to 200°C, and a heat distortion temperature (T_{d,} degradation temperature) of 200°C or higher.

According to another embodiment of the present disclosure, the coating composition may further comprise a chain extender.

Meanwhile, the present disclosure provides a packaging material that comprises a substrate layer comprising paper; and a coating layer provided on the substrate layer, wherein the coating layer is formed from the coating composition.

According to an embodiment of the present disclosure, the recovery rate of the substrate layer in the packaging material may be 70% or more in a recyclability evaluation according to UL2485.

Meanwhile, the present disclosure provides a process for preparing a packaging material that comprises preparing a substrate comprising paper; and melt-extruding the coating composition on the substrate to form a substrate layer and a coating layer.

### Advantageous Effects of Invention

The coating composition according to the present disclosure can form a coating layer with secured thermal stability and stretchability as it comprises polyhydroxyalkanoate and one or more types of polylactic acid. Therefore, even when the coating composition is coated on a base substrate, such as a paper substrate, by an extrusion method, which is a mass production packaging material manufacturing method performed under high-temperature and/or high-pressure conditions, stable coating can be carried out, and the manufacturing efficiency of the packaging material can be enhanced.

In addition, the packaging material prepared using the coating composition according to the present disclosure is excellent in biodegradability and recyclability, while it has enhanced durability, water resistance, oil resistance, thermal resistance, and contamination resistance. Thus, it can be used not only for the manufacture of disposable consumer goods, such as beverage cups, but also for the manufacture of food containers that are cooked in a microwave oven, by various molding methods (e.g., hot air method, ultrasonic sealing method, paper press method, etc.).

### Brief Description of Drawings

Fig. 1 is a cross-sectional view showing a packaging material according to an embodiment of the present disclosure.
Fig. 2 is a reference view for explaining Test Example 2.
Fig. 3 is a reference view for explaining Test Example 3.
Fig. 4 is a reject image confirmed during the recyclability evaluation procedure of Test Example 4.

### Best Mode for Carrying out the Invention

Hereinafter, the present disclosure will be described in detail. The present disclosure is not limited to those given below, but it may be modified into various forms as long as the gist of the disclosure is not changed.

In the present specification, the term "comprising" is intended to specify a particular characteristic, region, step, process, element, and/or component. It does not exclude the presence or addition of any other characteristic, region, step, process, element and/or component, unless specifically stated to the contrary.

All numbers and expressions related to the quantities of components, reaction conditions, and the like used herein are to be understood as being modified by the term "about" unless otherwise indicated.

The present disclosure provides a coating composition (coating composition for packaging materials), which comprises one or more specific polymer resins, a packaging material (paper-based packaging material) prepared using the same, and a process for preparing the packaging material. Specifically, the coating composition may comprise three or more compostable polymer resins. As it is coated on a paper substrate, a packaging material capable of being biodegraded not only under industrial composting conditions but also under home composting conditions is prepared, which will be described as follows.

### Coating composition

The coating composition of the present disclosure comprises polyhydroxyalkanoate (PHA); and two or more types of polylactic acid (PLA). The coating composition comprises polyhydroxyalkanoate (PHA), which is excellent in biodegradability, and two or more types of polylactic acid (PLA) having different melting properties from each other. As a result, it can secure extrusion stability when it is used to prepare packaging materials by a melt extrusion coating method while providing a packaging material excellent in biodegradability (compostability).

### Polyhydroxyalkanoate (PHA)

The polyhydroxyalkanoate (PHA) contained in the coating composition according to the present disclosure is a natural polymer material that accumulates within microbial cells. Such PHA is not only biodegradable under home composting conditions, but also has the characteristic of being aerobically biodegradable in the marine environment according to the test standard defined in ASTM D6691. It also has excellent ductility and impact resistance. Therefore, it has excellent competitiveness as a coating material for naturally biodegradable packaging materials.

The PHA may be a homopolymer or a copolymer comprising repeat units derived from various monomers. Specifically, the PHA may comprise a repeat unit derived from one or more monomers selected from the group consisting of 3-hydroxybutyrate (3HB), 3-hydroxyhexanoate (3HH), 3-hydroxypropionate (3HP), 3-hydroxyvalerate (3HV), 4-hydroxybutyrate (4HB), 4-hydroxyhexanoate (4HH), 4-hydroxypropionate (4HP), 4-hydroxyvalerate (4HV), 5-hydroxyvalerate (5HV), and 6-hydroxyhexanoate (6HH).

For example, the PHA may comprise at least one selected from the group consisting of a poly(3-hydroxybutyrate-co-3-hydroxyhexanoate) copolymer (P3HB-co-3HH), a poly(3-hydroxybutyrate-co-3-hydroxyvalerate) copolymer (P3HB-co-3HV), a poly(3-hydroxybutyrate-co-3-hydroxypropionate) copolymer (P3HB-co-3HP), a poly(hydroxybutyrate-co-4-hydroxybutyrate) copolymer (P3HB-co-4HB), a poly(3-hydroxybutyrate-co-4-hydroxyhexanoate) copolymer (P3HB-co-4HH), a poly(3-hydroxybutyrate-co-4-hydroxyvalerate) copolymer (P3HB-co-4HV), and a poly(3-hydroxybutyrate-co-4-hydroxypropionate) copolymer (P3HB-co-4HP).

The PHA may be classified into a crystalline PHA (cPHA), a semi-crystalline PHA (scPHA), or an amorphous PHA (aPHA) depending on the types of monomers and the content of repeat units derived from the monomers. For example, the PHA may be classified into cPHA, scPHA, or aPHA as its crystallinity is controlled depending on the content of a repeat unit derived from 4-hydroxybutyrate (4HB). Specifically, the PHA may be an amorphous PHA having a relatively high content of the 4HB repeat unit.

According to the present disclosure, the PHA may comprise a repeat unit derived from 4-hydroxybutyrate (4HB) (4HB repeat unit) in an amount of 0.1% by weight to 60% by weight based on the total weight of the PHA. Specifically, the PHA may comprise the 4HB repeat unit in an amount of 0.1% by weight to 60% by weight, 1% by weight to 58% by weight, 5% by weight to 55% by weight, 10% by weight to 53% by weight, 15% by weight to 50% by weight, 20% by weight to 45% by weight, 25% by weight to 43% by weight, or 30% by weight to 40% by weight, based on the total weight of the PHA, but it is not limited thereto. As the content of the 4HB repeat unit is within the above range, the ductility and impact resistance of a packaging material can be enhanced.

For example, the PHA may be a poly(3-hydroxybutyrate-co-4-hydroxybutyrate) copolymer (P3HB-co-4HB) that comprises a repeat unit (3HB repeat unit) derived from the 3-hydroxybutyrate (3HB) and a repeat unit (4HB repeat unit) derived from the 4-hydroxybutyrate (4HB). Specifically, the PHA may be P3HB-co-4HB comprising the 3HB repeat unit in an amount of 40% by weight to 99.9% by weight and the 4HB repeat unit in an amount of 0.1% by weight to 60% by weight based on the total weight of the PHA. More specifically, the PHA may be an amorphous P3HB-co-4HB comprising the 3HB repeat unit in an amount of 55% by weight to 75% by weight and the 4HB repeat unit in an amount of 25% by weight to 45% by weight based on the total weight of the PHA.

The weight average molecular weight (Mw) of the PHA is not particularly limited, but it may be 100,000 g/mole to 1,000,000 g/mole, 200,000 g/mole to 900,000 g/mole, 300,000 g/mole to 800,000 g/mole, 400,000 g/mole to 700,000 g/mole, or 500,000 g/mole to 700,000 g/mole.

The melting temperature (Tₘ) of the PHA may, or may not, be measured. Specifically, the melting temperature (Tₘ) of the PHA may not be measured, or it may be 120°C to 200°C, 140°C to 190°C, or 160°C to 180°C.

The PHA may have a heat distortion temperature (T_{d}, degradation temperature) of 200°C or higher, 230°C or higher, 250°C or higher, 270°C or higher, 290°C or higher, or 310°C or higher (e.g., 250°C to 300°C). The heat distortion temperature (T_{d}) may refer to the temperature at which deformation by an arbitrary amount (0.25 mm) occurs under a certain load (0.45 MPa/1.8 MPa).

According to the present disclosure, the content of the PHA may be 5% by weight to 65% by weight based on the total weight of the mixed resin in which the PHA and the PLA are mixed. Specifically, the content of the PHA may be 5% by weight to 65% by weight, 10% by weight to 60% by weight, 15% by weight to 55% by weight, 20% by weight to 50% by weight, 25% by weight to 45% by weight, or 30% by weight to 40% by weight, based on the total weight of the mixed resin, but it is not limited thereto.

### Polylactic acid (PLA)

The polylactic acid (PLA) contained in the coating composition of the present disclosure has the characteristic of high stiffness. The polylactic acid (PLA) is contained in the coating composition in two or more types. For example, the PLA may comprise a first polylactic acid (first PLA), a second polylactic acid (second PLA), or a combination thereof.

Specifically, the PLA may comprise a first polylactic acid (first PLA) and a second polylactic acid (second PLA) having a melt index (MI) different from that of the first polylactic acid (first PLA). As two types of PLA having different melt indices (MI) are employed in the coating composition, the flowability required in the melt extrusion coating method is secured. Thus, when the coating composition is used to prepare packaging materials, the coating composition can be sufficiently impregnated into the substrate while preventing the surging phenomenon.

The first PLA may comprise L-lactic acid, D-lactic acid, D,L-lactic acid, or a combination thereof. The weight average molecular weight (Mw) of the first PLA is not particularly limited, but it may be 10,000 g/mole to 500,000 g/mole, 5,000 g/mole to 300,000 g/mole, or 100,000 g/mole to 200,000 g/mole.

The first PLA may have a melt index (MI) of greater than 30 g/10 minutes, 35 g/10 minutes or higher, 40 g/10 minutes or higher, 50 g/10 minutes or higher, 60 g/10 minutes or higher, or 70 g/10 minutes or higher, at 210°C and 2.16 kg. Specifically, the first PLA may have a melt index (MI) of 40 g/10 minutes to 70 g/10 minutes, 45 g/10 minutes to 70 g/10 minutes, or 50 g/10 minutes to 70 g/10 minutes, but it is not limited thereto.

The second PLA may comprise L-lactic acid, D-lactic acid, D,L-lactic acid, or a combination thereof. The weight average molecular weight (Mw) of the second PLA is not particularly limited, but it may be 10,000 g/mole to 500,000 g/mole, 5,000 g/mole to 300,000 g/mole, or 100,000 g/mole to 200,000 g/mole.

The second PLA may have a melt index (MI) of less than 35 g/10 minutes, 30 g/10 minutes or less, 28 g/10 minutes or less, 25 g/10 minutes or less, 20 g/10 minutes or less, or 15 g/10 minutes or less, at 210°C and 2.16 kg. Specifically, the second PLA may have a melt index (MI) of 1 g/10 minutes to 30 g/10 minutes, 3 g/10 minutes to 20 g/10 minutes, or 5 g/10 minutes to 10 g/10 minutes, but it is not limited thereto.

According to the present disclosure, the content of the PLA may be 35% by weight to 95% by weight based on the total weight of the mixed resin in which the PHA and the PLA are mixed. Specifically, the content of the PLA may be 35% by weight to 95% by weight, 40% by weight to 90% by weight, 45% by weight to 85% by weight, 50% by weight to 80% by weight, 55% by weight to 75% by weight, or 60% by weight to 70% by weight, based on the total weight of the mixed resin, but it is not limited thereto.

For example, when the PLA comprises the first PLA and the second PLA, the content of the first PLA may be 30% by weight to 75% by weight, and the content of the second PLA may be 5% by weight to 20% by weight, based on the total weight of the mixed resin. Specifically, the content of the first PLA may be 30% by weight to 75% by weight, 40% by weight to 70% by weight, 50% by weight to 65% by weight, or 55% by weight to 60% by weight, based on the total weight of the mixed resin, but it is not limited thereto. In addition, the content of the second PLA may be 5% by weight to 20% by weight, 7% by weight to 18% by weight, 10% by weight to 15% by weight, or 10% by weight to 12% by weight, based on the total weight of the mixed resin, but it is not limited thereto.

Meanwhile, the coating composition of the present disclosure may further comprise a chain extender. As the chain extender is further employed, the compatibility between PHA and PLA of different species is enhanced, so that the melt strength can be enhanced. Such a chain extender is not particularly limited as long as it is a commonly known compound. Specifically, an epoxide-based compound, a carbodiimide-based compound, an isocyanate-based compound, an acrylate-based compound, or a peroxide-based compound may be used.

The content of the chain extender is not particularly limited, but it may be 0 parts by weight to 3.5 parts by weight, 0.1 parts by weight to 2.5 parts by weight, or 0.2 parts by weight to 1.5 parts by weight, based on 100 parts by weight of the mixed resin, in light of the physical properties of the coating composition.

The coating composition of the present disclosure may further comprise commonly known additives (e.g., antioxidants, slip agents, dispersants, heat stabilizers, UV blockers, fillers, etc.) to enhance processability and correct quality.

### Packaging material

In general, compostable polymer resins have lower melting temperatures and thermal resistance than synthetic resins (e.g., polyolefin resins); thus, work in a relatively low temperature range is required to prevent the damage to quality caused by deterioration during thermal processing such as extrusion. Therefore, they have low manufacturing suitability in mass production packaging material manufacturing lines where high-speed production environments are mainly used. In the present disclosure, however, as a coating composition, in which amorphous polyhydroxyalkanoate (aPHA) having a relatively low glass transition temperature is mixed with polylactic acid (PLA) having thermal resistance, is adopted to prepare packaging materials, enhanced thermal stability and stretchability can be secured. In addition, the packaging material of the present disclosure is prepared by coating the coating composition by a melt extrusion method, thereby overcoming the limitations of biodegradable paper packaging materials that were previously used only as disposable consumer goods, such as beverage cups used in franchises, and it can exhibit stable durability and thermal stability even for microwave cooking.

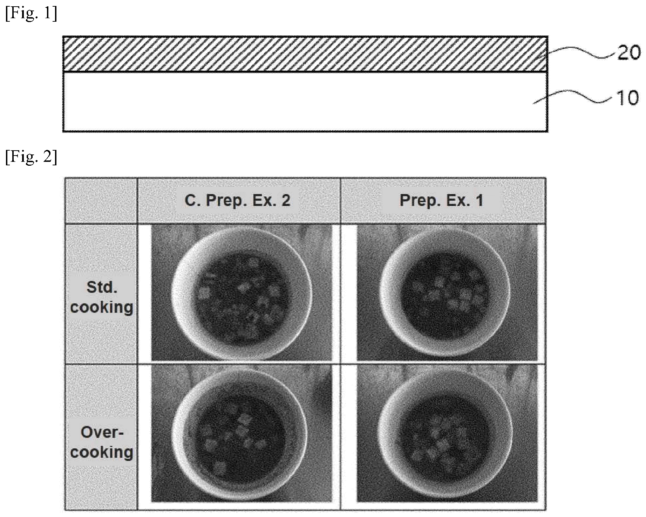

The packaging material of the present disclosure comprises a substrate layer; and a coating layer, which will be described with reference to Fig. 1 as follows.

### Substrate layer (10)

The substrate layer (10) contained in the packaging material of the present disclosure comprises paper. Specifically, the substrate layer (10) may be composed of a paper substrate. The paper substrate is not particularly limited as long as it is commonly known. Specifically, it may comprise at least one selected from the group consisting of white paper (imitation vellum), off-white paper, colored paper, coarse paper, heavy paper, pile paper, art paper, snow paper, snow white paper, single-sided art paper, royal art paper, NCR paper, leather paper, laid paper, CCP paper, Kraft paper, Manila ivory paper, royal ivory paper, tracing paper, tant paper, fancy paper, cotton paper, label paper, white board paper, photo paper, and cup paper.

The basis weight of the paper substrate is not particularly limited, but it may be 50 gsm or more, 70 gsm or more, 90 gsm or more, 150 gsm or more, 210 gsm or more, 230 gsm or more, 260 gsm or more, or 280 gsm or more (e.g., 30 gsm to 350 gsm), in light of the mechanical strength of the packaging material.

Primer coating may be performed on one side and/or the other side of the paper substrate to enhance the bonding force with the coating layer (20), or printing processing may be performed for design.

### Coating layer (20)

The coating layer (20) contained in the packaging material of the present disclosure is formed from the coating composition described above. As the coating layer (20) is prepared using the coating composition described above, a packaging material excellent in durability, water resistance, oil resistance, thermal resistance, and contamination resistance can be provided.

The thickness of the coating layer (20) is not particularly limited, but it may be 20 µm or more, 50 µm or more, 70 µm or more, or 100 µm or more (e.g., 20 µm to 200 µm), in light of the physical properties of the packaging material.

The packaging material of the present disclosure may be cup-molded by a hot air method or an ultrasonic sealing method, or it may be processed in a press mold by a paper press method. The cup molding through the hot air method may be performed under a temperature condition of 400°C to 600°C.

The packaging material of the present disclosure is excellent in water resistance and oil resistance, so that it satisfies requirements suitable as a packaging material for food and the like. In particular, the packaging material exhibits enhanced oil resistance as compared with conventional packaging materials coated with polyolefin-based resins, which are nonpolar molecules, whereby it has low adsorption to oily foods, resulting in excellent contamination resistance.

In addition, the packaging material of the present disclosure is excellent in recyclability as well as biodegradability. Specifically, the recovery rate of the substrate layer in the packaging material may be 70% or more (specifically, 75% to 99.9%, 85% to 99%, or 95% to 98%) in a recyclability evaluation according to UL2485.

### Process for preparing a packaging material

The present disclosure can secure processability in a mass production packaging material manufacturing line as the coating composition described above is used to prepare a packaging material.

Specifically, the process for preparing a packaging material of the present disclosure comprises preparing a substrate comprising paper; and melt-extruding the coating composition described above on the substrate to form a substrate layer and a coating layer (preparing a packaging material comprising a substrate layer and a coating layer).

The substrate comprising paper may be the paper substrate described above, and the preparation thereof may be performed by a commonly known process.

The melt extrusion is performed to coat the coating composition described above as a thin film on the substrate. In particular, in the present disclosure, since a coating composition comprising PHA and two types of PLA having different melting properties (e.g., melt index (MI), etc.) is used for the melt extrusion, the load in the extruder and surging phenomenon can be prevented, and a coating layer can be formed in a state where stable flowability is secured. The formation of the coating layer through the melt extrusion is distinguished from conventional coating methods, in which a coating layer was formed by applying, depositing, or transferring an emulsion or fluidic coating material.

Meanwhile, in the case of PHA contained in the coating composition, solidification is easily promoted by heat, which may have an impact on the physical properties of the coating layer and the packaging material. Therefore, it is important to maintain constant flowability in the extruder in the melt extrusion coating process. Unlike melt extrusion coating of conventional polyolefin-based resins, since the range of processable conditions is not broad, careful adjustment of the melt extrusion coating conditions is required.

For example, according to the present disclosure, the melt extrusion of the coating composition may be performed under a temperature condition of 150°C to 220°C.

### Mode for the Invention

Hereinafter, the present disclosure will be described in detail with reference to Examples. However, the scope of the present disclosure is not limited to the following examples.

### 1. Preparation of a coating composition

### [Example 1]

A coating composition comprising a mixed resin, in which 65% by weight of first PLA, 5% by weight of second PLA, and 30% by weight of PHA (P3HB-co-4HB) were mixed based on the total weight of the mixed resin, was prepared by a conventional method.

### [Example 2]

A coating composition comprising a mixed resin, in which 60% by weight of first PLA, 10% by weight of second PLA, and 30% by weight of PHA (P3HB-co-4HB) were mixed based on the total weight of the mixed resin, was prepared by a conventional method.

### [Example 3]

A coating composition comprising a mixed resin, in which 65% by weight of first PLA, 5% by weight of second PLA, and 30% by weight of PHA (P3HB-co-4HB) were mixed based on the total weight of the mixed resin, was prepared by a conventional method.

### [Example 4]

A coating composition comprising a mixed resin, in which 60% by weight of first PLA, 10% by weight of second PLA, and 30% by weight of PHA (P3HB-co-4HB) were mixed based on the total weight of the mixed resin, was prepared by a conventional method.

The physical properties of the first PLA and the second PLA each used in Examples 1 to 4 are shown in Table 1 below. Here, the melt index (MI) is a value measured under conditions of 210°C and 2.16 kg.

**[Table 1]**

| | | Ex. 1 | Ex. 2 | Ex. 3 | Ex. 4 |
|---|---|---|---|---|---|
| First PLA | MI (g/10 min.) | 50 | 50 | 50 | 50 |
| | Mw (g/mole) | 105,017 | 105,017 | 105,017 | 105,017 |
| Second PLA | MI (g/10 min.) | 8 | 24 | 18 | 8 |
| | Mw (g/mole) | 194,647 | 150,969 | 163,154 | 194,647 |

### 2. Preparation of a packaging material

### [Preparation Examples 1 to 4]

The coating compositions prepared in Examples 1 to 4 were each melt-extruded on a paper substrate using a single-screw extruder (screw diameter Φ 120 mm) at a temperature of 170 to 190°C and a speed of 60 m/minute to prepare a packaging material having a structure of a paper substrate layer (thickness: about 365 µm) and a resin coating layer (thickness: 40 µm).

### [Comparative Preparation Example 1]

A packaging material composed of a paper substrate was prepared.

### [Comparative Preparation Example 2]

A conventional packaging material having a structure of a paper substrate layer (thickness: about 365 µm) and a resin coating layer (thickness: 30 µm), in which a polyolefin-based resin (specifically, polypropylene) was coated on a paper substrate, was prepared.

### [Test Example 1] Evaluation of water resistance and oil resistance

Specimens were prepared by cutting each of the packaging materials of Preparation Example 1 and Comparative Preparation Example 1 to a size of 70 mm in width and 70 mm in length, and the initial weight of each specimen was measured. Next, each specimen was fixed to a Gurley Cobb sizing tester, and then water resistance and oil resistance were respectively evaluated. The results are shown in Table 2 below. Specifically, for water resistance, distilled water was used as a test solution, and for oil resistance, a test solution corresponding to the KIT12 grade was used. 25 ml of each test solution was poured onto the specimen. After the time described in Table 2 below, the test solution was removed, and the final weight of the specimens was measured. The Cobb value and whether the KIT12 grade was passed were confirmed in comparison with the initial weight.

**[Table 2]**

| | | C. Prep. Ex. 1 (Paper) | Prep. Ex. 1 (Coated paper) |
|---|---|---|---|
| Water resistance (g/m²) | 2 minutes | 23.6 | < 1 |
| (Cobb value) | 10 minutes | 50.0 | < 1 |
| Oil resistance (KIT 12) | 15 seconds | Fail (KIT5) | Pass |

Referring to Table 2 above, the packaging material of Preparation Example 1 coated with the coating composition of Example 1 according to the present disclosure was very excellent in water resistance and oil resistance as compared with the packaging material of Comparative Preparation Example 1 composed of a paper substrate only.

### [Test Example 2] Evaluation of durability and cooking stability

Hot water (about 90.5°C) was placed in a container prepared using the packaging material of Preparation Example 1 coated with the coating composition of Example 1 according to the present disclosure and stored for 24 hours. Then, the appearance (inside and outside) of the container was visually observed to evaluate durability. As a result of observation, it was confirmed that phenomena such as decomposition, delamination, or swelling of the resin coating layer provided inside the container did not occur.

Meanwhile, commercially available soup-based foods (foods containing animal fat or chili oil) with water were added to each container prepared using the packaging materials of Preparation Example 1 and Comparative Preparation Example 2, and they were cooked in a microwave to evaluate cooking stability. Specifically, water was added to each container and cooked in a 1,000 W microwave according to the standard cooking method (about 2 minutes of cooking), guided by the cooking method, and overcooked (about 5 minutes of cooking) for more than twice the standard cooking time. The results are shown in Fig. 2. Referring to Fig. 2, it was confirmed that there were no water leakage and no deformation in appearance in the container prepared with the packaging material of Preparation Example 1 according to the present disclosure.

### [Test Example 3] Evaluation of contamination resistance

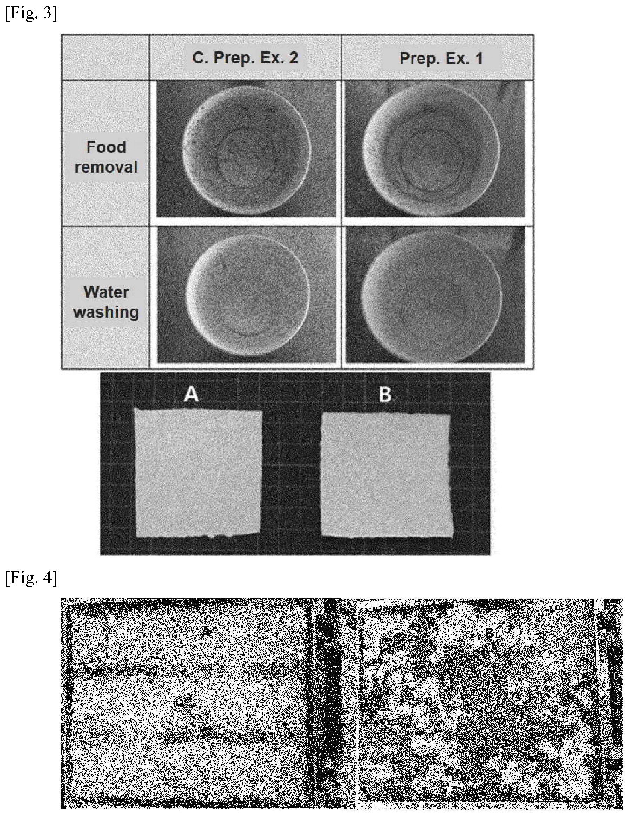

Containers were each molded from the packaging material of Preparation Example 1 coated with the coating composition of Example 1 according to the present disclosure and the packaging material of Comparative Preparation Example 2 coated with a conventional polyolefin-based resin. Contamination resistance was evaluated assuming a food consumption situation. Specifically, the food contained in each container was cooked in a microwave for 2 to 5 minutes and left at room temperature for 1 hour. Then, the food was removed, each container was lightly washed under running water, and the degree of contamination of each container was observed. The results are shown in Fig. 3 (A: packaging material of Comparative Preparation Example 2, B: packaging material of Preparation Example 1).

Referring to Fig. 3, when a part of the bottom of each container was cut and evaluated with the naked eye and YI measurement index, it was confirmed that the container prepared with the packaging material of Preparation Example 1 according to the present disclosure had little discoloration due to food and was cleanly washed, indicating excellent contamination resistance.

### [Test Example 4] Evaluation of recyclability

Recyclability was evaluated to confirm that the packaging material of Preparation Example 1 coated with the coating composition of Example 1 according to the present disclosure is superior to the packaging material of Comparative Preparation Example 2 coated with a conventional polyolefin-based resin in terms of recyclability in addition to enhanced compostability performance. Specifically, each packaging material was commissioned to a domestic paper recyclability testing institution to evaluate recyclability (reference standards: recyclability analysis method UL2485/disintegration stage TAPPI205, screen stage TAPPI 275). As a result, the reject rate was confirmed to be 24.15% for the packaging material (B) of Preparation Example 1 and 36.92% for the packaging material (A) of Comparative Preparation Example 2. In addition, the pulp recovery rate (substrate layer recovery rate) was confirmed to be about 98% for the packaging material (B) of Preparation Example 1 and about 67% for the packaging material (A) of Comparative Preparation Example 2 (see Fig. 4).

### [Test Example 5] Evaluation of processability

Processability was evaluated by visually observing the apparent flowability of the coating composition when the coating compositions prepared in Examples 1 and 4 were each melt-extruded on a paper substrate using a single-screw pilot extruder at a temperature of 170 to 190°C and a speed of 60 m/minute. The results are shown in Table 3 below.
Stable: When the coating composition flowed constantly without bending and was coated on the paper substrate
Somewhat stable: When the coating composition flowed with slight bending and was coated on the paper substrate
Unstable: When the coating composition flowed with severe bending and was coated on the paper substrate

**[Table 3]**

| | Ex. 1 | Ex. 4 |
|---|---|---|
| MI of the second PLA (210°C, 2.16 kg) | 8 | 8 |
| Processability | Stable | Stable |

Referring to Table 3 above, it is confirmed that the coating compositions of Examples 1 and 4 according to the present disclosure are excellent in processability (coatability).

### [Test Example 6] Measurement of thickness deviation

The thickness deviation of the packaging materials each prepared in Preparation Examples 1 to 4 was measured by applying a measurement method using a film thickness gauge (Mitutoyo) and a basis weight measurement method for paper packaging materials. The results are shown in Table 4 below. In the basis weight measurement method, samples were taken at 100 mm in width and in length and pretreated for 24 hours or more in an environment of 23°C and 50% RH. Then, the weight was measured.

**[Table 4]**

| | Prep. Ex. 1 (Ex. 1) | Prep. Ex. 2 (Ex. 2) | Prep. Ex. 3 (Ex. 3) | Prep. Ex. 4 (Ex. 4) |
|---|---|---|---|---|
| Std. deviation of thickness (change in basis weight) | 1.4 | 2.0 | 1.3 | 2.1 |

Referring to Table 4 above, the coating compositions of Examples 1 to 4 according to the present disclosure are excellent in processability (coatability), and the preparation of packaging materials was performed with almost no thickness deviation.

## Claims

1. A coating composition, which comprises polyhydroxyalkanoate (PHA); and two or more types of polylactic acid (PLA).

2. The coating composition of claim 1, wherein the polyhydroxyalkanoate comprises a repeat unit derived from 4-hydroxybutyrate (4HB) in an amount of 0.1% by weight to 60% by weight based on the total weight of the polyhydroxyalkanoate.

3. The coating composition of claim 1, wherein the polylactic acid comprises a first polylactic acid; and a second polylactic acid having a melt index (MI) different from that of the first polylactic acid.

4. The coating composition of claim 3, wherein the melt index (MI) of the first polylactic acid is 40 g/10 minutes to 70 g/10 minutes, and the melt index (MI) of the second polylactic acid is 1 g/10 minutes to 30 g/10 minutes.

5. The coating composition of claim 3, wherein the content of the polyhydroxyalkanoate is 5% by weight to 65% by weight, the content of the first polylactic acid is 30% by weight to 75% by weight, and the content of the second polylactic acid is 5% by weight to 20% by weight, based on the total weight of the mixed resin in which the polyhydroxyalkanoate and the polylactic acid are mixed.

6. The coating composition of claim 1, wherein the content of the polyhydroxyalkanoate is 5% by weight to 65% by weight, and the content of the polylactic acid is 35% by weight to 95% by weight, based on the total weight of the mixed resin in which the polyhydroxyalkanoate and the polylactic acid are mixed.

7. The coating composition of claim 1, wherein the polyhydroxyalkanoate has a weight average molecular weight (Mw) of 100,000 g/mole to 1,000,000 g/mole, a melting temperature (Tₘ) of 120°C to 200°C, and a heat distortion temperature (T_{d}) of 200°C or higher.

8. The coating composition of claim 1, which further comprises a chain extender.

9. A packaging material, which comprises a substrate layer comprising paper; and a coating layer provided on the substrate layer,
wherein the coating layer is formed from the coating composition according to any one of claims 1 to 8.

10. The packaging material of claim 9, wherein the recovery rate of the substrate layer in the packaging material is 70% or more in a recyclability evaluation according to UL2485.

11. A process for preparing a packaging material, which comprises: preparing a substrate comprising paper; and melt-extruding the coating composition according to any one of claims 1 to 8 on the substrate to form a substrate layer and a coating layer.
